# FASCICULE DE BREVET EUROPEEN

(11) **EP 3 224 462 B1**
(45) Date de publication et mention de la délivrance du brevet: **26.08.2020**
(21) Numéro de dépôt: 15812881.9
(22) Date de dépôt: 24.11.2015
(51) Int. Cl.: F02C 6/08, F02C 7/14

(54) **DISPOSITIF DE REFROIDISSEMENT POUR UNE TURBOMACHINE ALIMENTE PAR UN CIRCUIT DE DECHARGE**
KÜHLVORRICHTUNG FÜR EINE TURBOMASCHINE MIT VERSORGUNG DURCH EINEN ENTLADESCHALTUNG
COOLING DEVICE FOR A TURBOMACHINE SUPPLIED BY A DISCHARGE CIRCUIT

(30) Priorité: 25.11.2014 FR 1461416
(43) Date de publication de la demande: 04.10.2017
(73) Titulaire: Safran Aircraft Engines, 75015 Paris (FR)
(72) Inventeur: BOUJIDA, Benissa, 77550 Moissy-Cramayel (FR); BERNAVA, Daniel, 77550 Moissy-Cramayel (FR); IGEL, Dominik, 77550 Moissy-Cramayel (FR); ROTENBERG, Maxime, 77550 Moissy-Cramayel (FR)
(74) Mandataire: Gevers & Orès
(86) Numéro de dépôt international: PCT/FR2015/053200
(87) Numéro de publication internationale: WO 2016/083732

(56) Documents cités:
- EP-A1- 0 511 770
- EP-A1- 1 018 468
- US-B1- 8 261 527

## Description

L'invention se rapporte au domaine des turbomachines et, en particulier, aux turbopropulseurs, mais également aux turboréacteurs de grande puissance à double flux, tels que ceux utilisés en aéronautique civile et munis d'un organe dans lequel circule une huile de lubrification devant être refroidie selon certaines phases de fonctionnement. Cet organe est par exemple un réducteur de vitesse.

Pour accroître leurs performances, tout en réduisant le bruit et la consommation de carburant, les turbomachines, telles que les turbopropulseurs, doivent posséder des hélices de type "multipale" de grand diamètre, à bas régime de rotation. Or, la puissance transmise à l'hélice tournant à faible vitesse, par le générateur de gaz tournant à grande vitesse, au moyen d'un réducteur mécanique de vitesse, engendre une grande quantité de chaleur due aux pertes mécaniques, c'est-à-dire aux frottements. On comprendra que cette chaleur doive être évacuée ou dissipée de manière efficace, pour éviter de dégrader rapidement les organes mécaniques du réducteur, tels que les engrenages et les paliers, ou de dégrader les qualités du lubrifiant du réducteur, sous peine de constater la chute du rendement de la turbomachine. Or, même avec un rendement proche ou dépassant légèrement les 99%, le réducteur de vitesse d'une turbomachine d'une puissance mécanique de 10 000 kW dégage, malgré tout, une puissance thermique proche de 100 kW due aux pertes mécaniques. Il est bien connu, dans le domaine de l'art antérieur, d'évacuer ce type de chaleur, c'est-à-dire de dissiper une telle puissance thermique, en faisant circuler le lubrifiant du réducteur de vitesse, en circuit fermé, au moyen d'une pompe ou d'un thermosiphon, dans un radiateur, tel qu'un radiateur à huile ou un échangeur de chaleur air/huile, par exemple un échangeur connu sous le vocable anglo-saxon ACOC, "air cooled / oil cooler".

Il est connu de proposer un turbopropulseur comportant une écope dans laquelle est disposée un échangeur dans lequel circule le lubrifiant, comme cela est connu du document EP-0.511.770-A1.

Dans un tel turbopropulseur, l'air en mouvement traversant l'échangeur évacue la chaleur vers l'extérieur de l'écope et le lubrifiant refroidi retourne dans le réducteur de vitesse par le circuit de refroidissement. Un volet peut éventuellement être situé à l'entrée ou à la sortie de l'écope pour réguler le débit d'air traversant l'échangeur, afin de réguler la température du lubrifiant, par exemple pour des phases de fonctionnement du turbopropulseur selon lesquelles le radiateur est surdimensionné par rapport à la puissance thermique qu'il doit évacuer.

Pour de faibles vitesses de l'avion cependant, et pour lesquelles le turbopropulseur est en fonctionnement, l'écoulement de l'air traversant l'échangeur peut être insuffisant. Pour remédier à cet inconvénient, il est connu de proposer un turbopropulseur comportant un dispositif de refroidissement comportant un échangeur dont une sortie d'air est reliée à un éjecteur du type trompe à jet. Un tel éjecteur comporte un conduit de passage d'un flux d'air secondaire issu de l'échangeur comprenant au moins une buse de pulvérisation d'un flux d'air primaire issu d'un compresseur du turbopropulseur, destinée à accélérer le flux d'air secondaire par un effet de venturi. En aval de la buse, un premier tronçon de section réduite forme un mélangeur et un deuxième tronçon, de section plus grande, forme un diffuseur.

Plus particulièrement, on a proposé, dans les documents EP-1.018.468-A1 et US-8.261-527-B1 un turbopropulseur du type décrit précédemment, comportant un volet monté en aval du conduit de l'éjecteur, qui permet notamment la régulation du flux d'air.

La buse de pulvérisation est généralement alimentée par un piquage, ou conduit de prélèvement, réalisé sur un compresseur du turbopropulseur, de manière sélective, par une vanne qui permet de faire circuler le flux d'air ainsi prélevé en fonction des besoins d'alimentation de la buse.

Typiquement, la trompe à jet est utilisée pour pallier à un flux d'air secondaire insuffisant au travers de l'échangeur, configuration qui survient généralement pour des vitesses d'écoulement d'air réduites au travers de l'échangeur, par exemple lorsque l'avion qu'équipe la turbomachine roule à basse vitesse ou est arrêté dans l'attente d'un décollage.

Si la plupart des turbomachines comportent, de manière classique des dispositifs de prélèvement d'air conventionnels sur les compresseurs destinés à alimenter différents dispositifs comme par exemple un dispositif de pressurisation ou de conditionnement d'air de la cabine de l'aéronef associé, elles peuvent comporter en outre des dispositifs de décharge qui sont destinés à éviter les phénomènes de pompage dans les compresseurs de ces turbomachines, et en particulier dans les compresseurs haute pression.

En effet, dans une turbomachine, l'air est dirigé à travers plusieurs étages de compresseur jusqu'à une chambre de combustion. Lorsque l'air passe à travers les étages de compresseur successifs, la pression de l'air augmente. Sous certaines conditions, par exemple lorsque le moteur fonctionne à des régimes réduits, il peut survenir un phénomène de pompage.

Le pompage est un phénomène cyclique fondamental propre aux compresseurs dynamiques. En effet, dans un compresseur, la compression est obtenue par échange d'énergie dans le gaz mis en mouvement dans des rangées d'ailettes. A l'instar d'une aile d'avion qui, sous incidence élevée et à vitesse réduite perd sa portance et "décroche", un compresseur peut décrocher. A débit réduit, le compresseur ne permet plus de pousser le flux d'air. Comme le compresseur forme l'interface de deux réseaux à pressions différentes, à savoir respectivement un réseau d'aspiration et un réseau de refoulement, en cas de décrochage, la capacité du réseau de refoulement, qui présente la pression la plus élevée, est susceptible de se vider dans la capacité du réseau d'aspiration par un débit à contre-courant dans le compresseur.

Quand le réseau de refoulement s'est suffisamment vidé dans l'aspiration, le compresseur trouve de nouvelles conditions de fonctionnement lui permettant de rétablir le débit dans la bonne direction, jusqu'à ce qu'un nouveau cycle d'instabilité recommence.

Ces grandes fluctuations cycliques de débit, portant le nom de pompage, s'apparentent à une série de chocs dont les conséquences mécaniques peuvent être désastreuses, et provoquer, par exemple, des ruptures d'ailettes, ou des vibrations radiales de très grand niveau, avec destruction des dispositifs d'étanchéité internes sur les compresseurs centrifuges.

Les turbomachines actuelles comportent par conséquent des dispositifs de décharge de leurs compresseurs. Un dispositif de décharge comporte pour l'essentiel un piquage ou conduit de prélèvement de grandes dimensions, réalisé au refoulement du compresseur, par exemple le compresseur haute pression, qui permet, pour des débits réduits, de faire chuter la pression en aval du compresseur afin d'éviter les refoulements et par conséquent d'éviter les phénomènes de pompage. L'air prélevé sur le compresseur peut être évacué dans différents dispositifs à l'intérieur ou à l'extérieur de l'écoulement interne d'une veine de gaz de la turbomachine.

Le dispositif de décharge est destiné à évacuer l'air sous pression selon des débits élevés et à cet effet il comporte des piquages ou conduits de prélèvement qui, pour des considérations d'encombrement et d'efficacité de la décharge sont toujours placés, en aval du compresseur dont ils assurent la décharge, ces conduits devant d'une part assurer la décharge de tous les étages du compresseur associé, et d'autre part être de dimensions suffisantes pour permettre le passage de gros débits.

Une turbomachine conventionnelle présentant un dispositif de décharge et un dispositif de refroidissement du type décrit précédemment peut donc comporter donc un piquage conventionnel ou conduit de prélèvement et un piquage ou conduit de prélèvement dédié à un dispositif de décharge, tous deux réalisés sur le même compresseur, et destinés à alimenter d'une part le dispositif de refroidissement et d'autre part le dispositif de décharge dans des conditions pourtant similaires, c'est-à-dire lorsque la turbomachine fonctionne à un régime de rotation réduit.

Cette conception présente l'inconvénient de multiplier les piquages ou conduits de prélèvement sur le compresseur, voire les vannes correspondantes.

L'invention remédie à cet inconvénient en proposant une turbomachine équipée d'une d'alimentation au moins partiellement commune de ces dispositifs.

Dans ce but, l'invention propose une turbomachine, comportant un dispositif de décharge d'un compresseur, en particulier haute pression, comportant au moins une vanne de décharge dudit compresseur dont une sortie est reliée à un circuit de décharge apte à évacuer un flux d'air de décharge, et au moins un dispositif de refroidissement d'un organe, comportant un échangeur de chaleur dont une sortie d'air est reliée à un éjecteur du type trompe à jet, qui comporte un conduit de passage d'un flux d'air secondaire issu de ladite sortie d'air ainsi qu'une buse de pulvérisation d'un flux d'air primaire à l'intérieur dudit conduit de passage, dont la pulvérisation est susceptible d'être sélectivement autorisée ou interrompue par l'intermédiaire d'une vanne d'éjecteur, cette turbomachine étant avantageusement caractérisée en ce que la buse est reliée audit circuit de décharge.

Selon d'autres caractéristiques de l'invention :
- le circuit de décharge du compresseur comporte au moins une sortie destinée à évacuer le flux d'air de décharge à l'intérieur d'une veine d'écoulement interne des gaz de la turbomachine,
- le circuit de décharge du compresseur comporte au moins une sortie destinée à évacuer le flux d'air de décharge à l'extérieur d'une veine d'écoulement interne des gaz de la turbomachine,
- le circuit de décharge comporte au moins une sortie destinée à évacuer le flux d'air de décharge à l'extérieur de la turbomachine,
- le circuit de décharge du compresseur comporte une unique sortie constituée de la buse de pulvérisation,
- la vanne de décharge est une vanne à deux voies dont une entrée est reliée au compresseur et dont une sortie est reliée au circuit de décharge et à la buse du dispositif de refroidissement, la pulvérisation du flux d'air primaire dans la buse étant autorisée ou interrompue uniquement par la vanne de décharge,
- la vanne de décharge est une vanne régulée à au moins trois voies dont une entrée est reliée au compresseur, dont une sortie est reliée au circuit de décharge, et dont au moins une sortie est reliée à une buse associée à un dispositif de refroidissement, la vanne assurant la régulation progressive du débit entre ses sorties,
- l'échangeur est un échangeur air/huile de refroidissement de l'huile de lubrification de l'organe de la turbomachine.
- une entrée d'air de l'échangeur de chaque dispositif de refroidissement est reliée pour son alimentation en air extérieur à une prise d'air débouchant en surface d'une nacelle de support de la turbomachine,
- la turbomachine comporte au moins deux dispositifs de refroidissement dont des entrées d'air des échangeurs sont reliées à autant de sorties d'une vanne d'alimentation régulée à au moins trois voies dont l'entrée est reliée une prise d'air commune, ladite vanne d'alimentation assurant la régulation progressive du débit d'air entre ses au moins deux sorties,
- le dispositif de décharge est agencé en aval du compresseur qu'il décharge.

L'invention concerne aussi un procédé de commande d'un dispositif de refroidissement d'au moins un organe d'une turbomachine, comportant un échangeur de chaleur dont une sortie d'air est reliée à un éjecteur du type trompe à jet qui comporte un conduit de passage d'un flux d'air secondaire issu de ladite sortie d'air ainsi qu'une buse de pulvérisation d'un flux d'air primaire à l'intérieur dudit conduit de passage.

Ce procédé est caractérisé en ce qu'il comporte au moins une étape d'alimentation de la buse de pulvérisation au cours de laquelle on alimente la buse de pulvérisation par un flux d'air de décharge provenant d'un circuit de décharge d'un compresseur de la turbomachine, et au moins une étape de coupure d'alimentation de la buse de pulvérisation.

Selon une autre caractéristique du procédé, l'étape d'alimentation correspond à un fonctionnement à faible puissance de la turbomachine, notamment un fonctionnement à un régime de ralenti, au cours duquel une vanne de décharge, dont une sortie est reliée au circuit de décharge, est ouverte, et l'étape de coupure d'alimentation de la buse de pulvérisation correspond à un fonctionnement à puissance nominale ou maximale, au cours duquel la vanne de décharge est fermée.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue en coupe d'un turbopropulseur selon un état antérieur de la technique ;
- la figure 2 est une vue schématique d'une turbomachine selon un état antérieur de la technique ;
- la figure 3 est une vue schématique d'un premier mode de réalisation d'une turbomachine réalisée conformément à l'invention ;
- la figure 4 est une vue en coupe d'une première variante d'un turbopropulseur selon le premier mode de réalisation de l'invention ;
- la figure 5 est une vue en coupe d'une deuxième variante du turbopropulseur selon le premier mode de réalisation de l'invention ;
- la figure 6 est une vue en coupe d'une troisième variante du turbopropulseur selon le premier mode de réalisation de l'invention ;
- la figure 7 est une vue schématique d'un deuxième mode de réalisation d'une turbomachine réalisée conformément à l'invention ;
- la figure 8 est une vue en coupe d'un turbopropulseur selon le deuxième mode de réalisation de l'invention ;
- la figure 9 est une vue schématique d'un troisième mode de réalisation d'une turbomachine réalisée conformément à l'invention ;
- la figure 10 est une vue schématique d'un quatrième mode de réalisation d'une turbomachine réalisée conformément à l'invention.

Dans la description qui va suivre, des chiffres de référence identiques désignent des pièces identiques ou ayant des fonctions similaires.

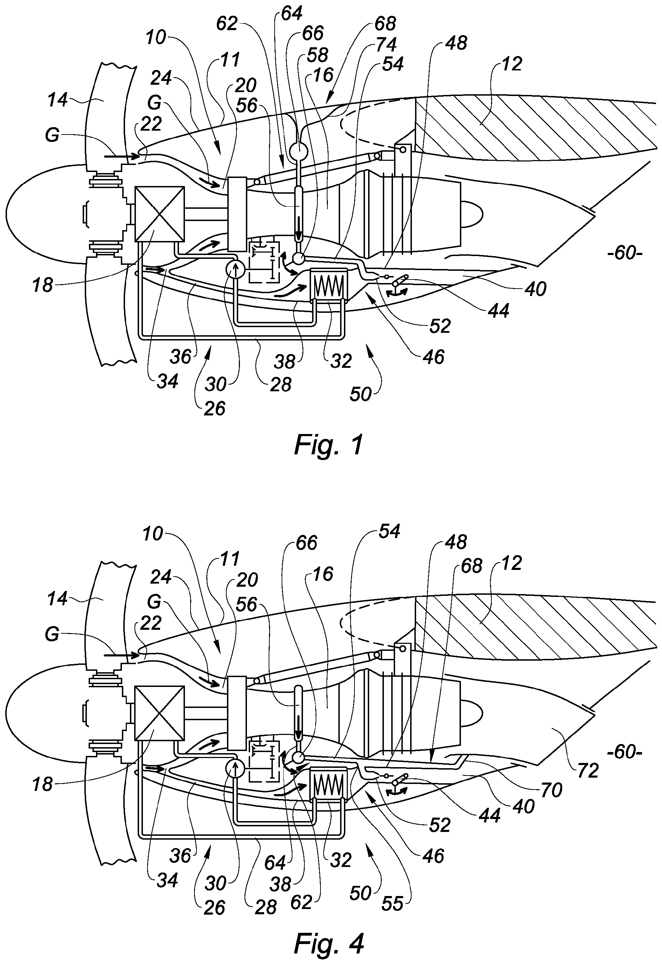

On a représenté à la figure 1 les éléments principaux d'une turbomachine 10 installée dans une nacelle 11 sous l'aile 12 d'un avion.

Dans ce cas, la turbomachine 10 est un turbopropulseur, mais cette configuration n'est aucunement limitative de l'invention.

Dans la partie amont de celui-ci se trouve une hélice 14 entraînée en rotation par une turbine 16, par l'intermédiaire d'un réducteur de vitesse 18.

La turbine 16 reçoit les gaz de combustion d'une chambre de combustion qui est alimentée en air par une circulation interne d'air 20 dont l'entrée s'effectue par une manche d'entrée 22, qui est placée immédiatement en aval de l'hélice 14, au début d'un capot amont 24 de la nacelle 11 du turbopropulseur 10. L'écoulement des gaz traversant le turbopropulseur 10 a été représenté par des flèches "G".

Le réducteur 18 est alimenté en lubrifiant par un circuit de lubrification 26 qui comporte pour l'essentiel des conduites 28, une pompe 30, et un échangeur de chaleur 32 destiné à permettre le refroidissement du lubrifiant circulant dans le réducteur de vitesse 18.

L'échangeur 32 fait partie d'un dispositif de refroidissement 50, qui s'étend sur toute la dimension longitudinale du turbopropulseur. L'air de refroidissement de l'échangeur 32 est prélevé en aval de la manche d'entrée 22. On utilise à cet effet une fente de prise d'air 34, placée sur la circulation interne d'air 20 de la turbomachine, en aval de la manche d'entrée 22, pour alimenter une conduite d'amenée d'air 36 qui alimente en air frais l'échangeur 32, logé dans une partie médiane 38 du dispositif de refroidissement 50, élargie aux fins de réception de l'échangeur 32.

Le dispositif de refroidissement 50 se complète par une conduite d'évacuation 40, placée en aval de la partie centrale 38 pour prolonger la circulation d'air dans l'échangeur 32 et pour évacuer l'air dans le milieu ambiant 60. Le débit au travers du dispositif de refroidissement 50 peut par ailleurs être régulé par un volet 44 placé dans la conduite d'évacuation 40.

Dans un tel turbopropulseur 10, le fonctionnement du dispositif de refroidissement est lié aux conditions de fonctionnement du turbopropulseur 10.

Ainsi, en vol à grande vitesse en régime de croisière, lors d'un vol de longue durée par exemple, ou par grand froid, l'air pénétrant dans la fente de prise d'air 34, s'acheminant par la conduite d'amenée 36 à travers l'échangeur 32 et évacué par la conduite d'évacuation 40, refroidit généralement suffisamment l'échangeur 32 et le lubrifiant qui le traverse. Sous certaines conditions, il peut éventuellement être nécessaire de moduler le débit d'air dans le dispositif de refroidissement 50 au moyen du volet 44 pour éviter un refroidissement trop important du lubrifiant, qui pénaliserait alors le fonctionnement du réducteur 18. Le volet 44 peut être avantageusement commandé par le dispositif de régulation automatique du fonctionnement du turbopropulseur 10 qui est de préférence du type: " à pleine autorité redondante ", c'est-à-dire du type " FADEC " (Full Authority Digital Engine Control) et qui est actionné par un moyen électrique, électromécanique, hydraulique ou électrohydraulique connu tel qu'un vérin (non représenté).

En revanche, à faible vitesse, ou dans des conditions selon lesquelles le flux d'air parvenant naturellement à la conduite d'amenée d'air 36 est insuffisant, par exemple lors d'une attente en parking, d'une circulation en ralenti au sol, ou d'un roulage par forte chaleur, il s'avère utile d'accélérer le débit de circulation d'air dans le dispositif 50 de refroidissement.

A cet effet, le circuit de refroidissement 50 comporte, en aval de l'échangeur 32 et en amont de la conduite d'évacuation 40, un éjecteur 46 du type trompe à jet.

Comme l'illustre la figure 1, un tel éjecteur 46 comporte pour l'essentiel un conduit 48 de passage d'un flux d'air secondaire issu du radiateur 32 et au moins une buse 52 de pulvérisation d'un flux d'air primaire à l'intérieur dudit conduit 48, destiné à accélérer le flux d'air par un effet de venturi.

Comme l'illustre la figure 1, la buse 52 est alimentée en air primaire par un conduit de prélèvement 54 relié au compresseur 56 du turbopropulseur 10, et la circulation d'air au sein de ce conduit de prélèvement 54 peut être autorisée ou interrompue par une vanne d'éjecteur 58.

L'injection d'air primaire permet, par effet de venturi, d'accélérer le flux d'air secondaire et par conséquent lorsque cela est requis d'augmenter le débit traversant l'échangeur 32, avec pour effet un meilleur refroidissement.

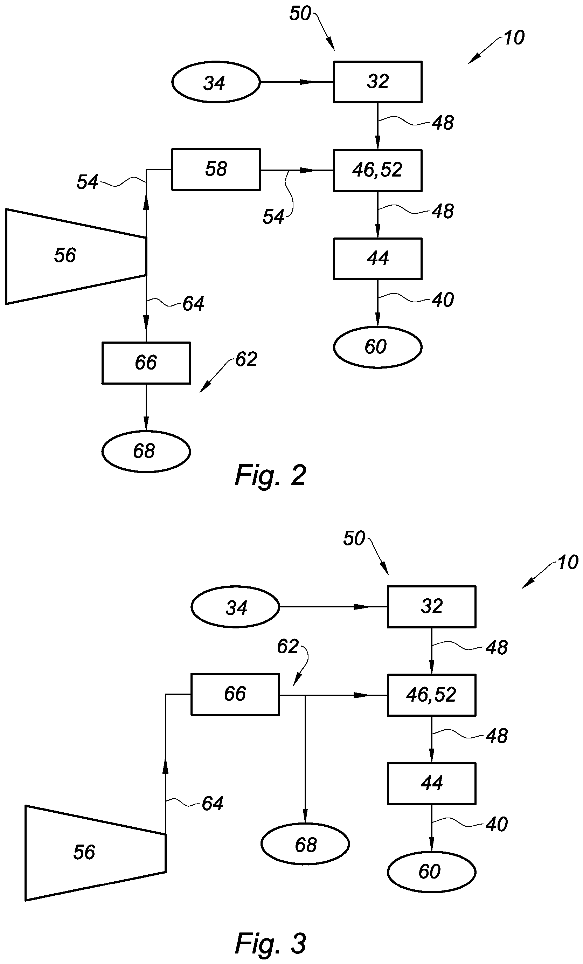

La configuration schématique d'un tel dispositif de refroidissement 50 a également été représentée pour partie et de manière schématique à la figure 2 d'une manière plus générale, ledit dispositif de refroidissement 50 trouvant à s'appliquer à toute turbomachine comportant un échangeur 32 dédié au refroidissement d'un organe, et non spécifiquement à un turbomoteur comportant un échangeur 32 dédié au refroidissement d'un réducteur 18.

En référence à la figure 1, le turbopropulseur 10 comporte aussi de manière classique un dispositif de décharge 62 destiné à éviter les phénomènes de pompage au sein du compresseur 56.

Le dispositif 62 comporte successivement un piquage 64 ou conduit de prélèvement relié au compresseur 56, et une vanne 66 de décharge dudit compresseur dont une sortie est reliée à un circuit 68 de décharge apte à évacuer un flux d'air de décharge. La vanne 66 de décharge est plus connue sous le nom de vanne HBV ou "Handling Bleed Valve".

Sur la figure 1, on a représenté un circuit 68 de décharge constitué d'une écope 74 qui permet d'évacuer l'air déchargé du compresseur 56 directement dans le milieu ambiant, mais il sera compris que le circuit de décharge 68 peut prendre d'autres configurations, comme on le verra ultérieurement en référence à différentes variantes de l'invention.

Dans cette configuration, on voit bien sur la figure 1 comme sur la figure 2, qu'une turbomachine, comme le turbopropulseur 10, équipée d'un dispositif de refroidissement 50 et d'un dispositif de décharge 62 comporte deux conduits de prélèvements 54 et 64 et deux vannes, à savoir une vanne d'éjecteur 58 et une vanne de décharge 66.

Or, ces vannes 58, 66 sont commandées en ouverture dans les mêmes conditions de fonctionnement de la turbomachine, c'est-à-dire pour des régimes réduits de rotation de la turbomachine et à faible vitesse, d'une part dans le cadre du dispositif de décharge 62 pour éviter les phénomènes de pompage au sein du compresseur 56, et d'autre part dans le cadre du dispositif de refroidissement pour augmenter le débit dans l'échangeur 32.

La redondance d'au moins les conduits de prélèvements 54 et 64 pénalise la masse embarquée de la turbomachine 10 et en augmente la complexité.

L'invention remédie à cet inconvénient en proposant une turbomachine 10 du type décrit précédemment, caractérisée en ce que, comme l'illustre de manière schématique les figures 3, 7, 9 et 10, la buse 52 du dispositif de refroidissement 50 est reliée au circuit de décharge 68 du dispositif de décharge 62.

Plus généralement, l'invention propose une turbomachine 10 comportant au moins un dispositif de refroidissement 50 comportant au moins une buse 52 de pulvérisation associée à ce dispositif de refroidissement 50, qui est reliée au circuit de décharge 68 de la turbomachine 10.

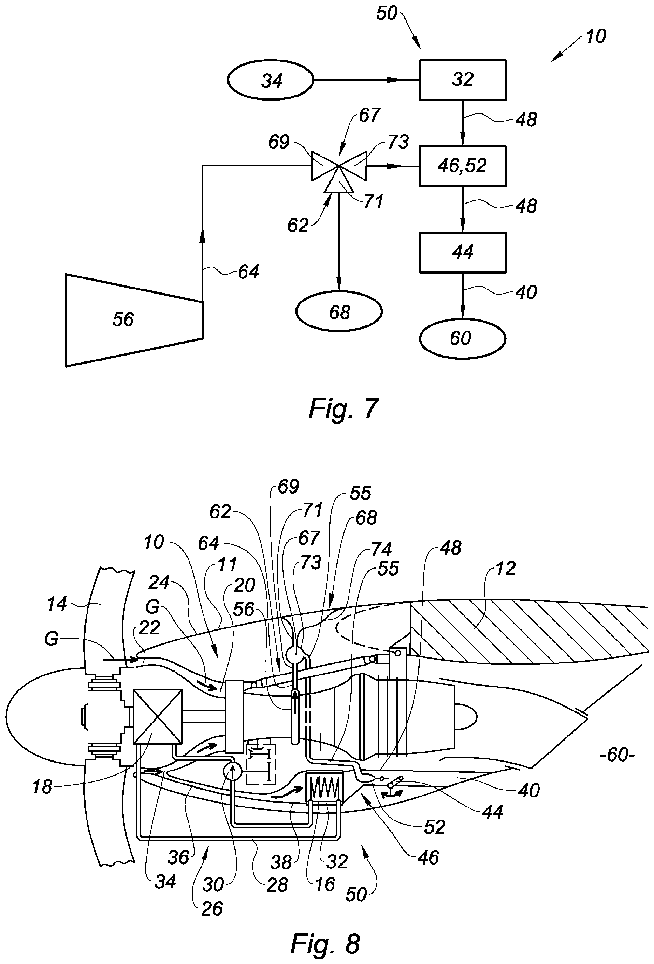

Il sera compris, comme on le verra dans la suite de la présente description, que la turbomachine 10 peut comporter plusieurs dispositifs de refroidissement 50 et plusieurs buses 52 correspondantes, comme cela sera décrit en particulier pour le turbopropulseur 10 des figures 7 à 10.

Cette configuration permet avantageusement d'alimenter la buse 52 du dispositif 50 de refroidissement à l'aide du circuit de décharge 68 sans utiliser un conduit de prélèvement spécifique du type du conduit de prélèvement 54 qui avait été représenté en référence à la figure 2, et donc sans nécessiter de piquage supplémentaire sur le carter du compresseur 56. Cette configuration permet donc de réduire le nombre de conduits mis en oeuvre dans la turbomachine 10.

Selon un premier mode de réalisation de l'invention qui a été représenté à la figure 3, la vanne de décharge est une vanne 66 à deux voies dont une entrée est reliée au compresseur 56, par exemple et de manière connue en aval de ce compresseur 56, et dont une sortie est reliée au circuit de décharge 68. La buse 52 du dispositif 50 de refroidissement est reliée au circuit de décharge 68 en aval de la sortie de la vanne 66 de décharge. De ce fait, la pulvérisation du flux d'air primaire dans la buse 52 est autorisée ou interrompue uniquement par la vanne de décharge 66. La vanne de décharge 66 joue par conséquent le rôle de vanne d'éjecteur.

En effet, la vanne de décharge 66 étant commandée en ouverture précisément selon les conditions de fonctionnement de la turbomachine qui sont aussi requises pour l'alimentation du dispositif 50 de refroidissement, ledit dispositif de refroidissement 50 peut donc être alimenté directement par la vanne de décharge 66 via le circuit de décharge 68. Cette configuration permet donc de réduire le nombre de vannes mises en oeuvre dans la turbomachine 10, c'est-à-dire pour des régimes réduits de rotation de la turbomachine et à faible vitesse.

Comme précédemment évoqué, le circuit de décharge 68 peut prendre différentes configurations, et la buse 52 peut être branchée sur ce circuit de décharge 68 quelle qu'en soit la configuration.

Par exemple, comme l'illustre la figure 4 qui représente une première variante du premier mode de réalisation de l'invention, le circuit de décharge 68 peut comporter au moins une sortie 70 destinée à évacuer le flux d'air de décharge à l'intérieur de l'écoulement interne des gaz du turbopropulseur 10, par exemple dans une tuyère 72. Le dispositif de refroidissement 50 comporte une dérivation 55 reliée au circuit de décharge 68 pour permettre d'alimenter la buse 52.

Le circuit de décharge 68 du compresseur peut aussi comporter au moins une sortie destinée à évacuer l'air prélevé à l'extérieur de l'écoulement interne des gaz du turbopropulseur 10. Là encore, le dispositif de refroidissement 50 comporte une dérivation 55 reliée au circuit de décharge 68 pour permettre d'alimenter la buse 52.

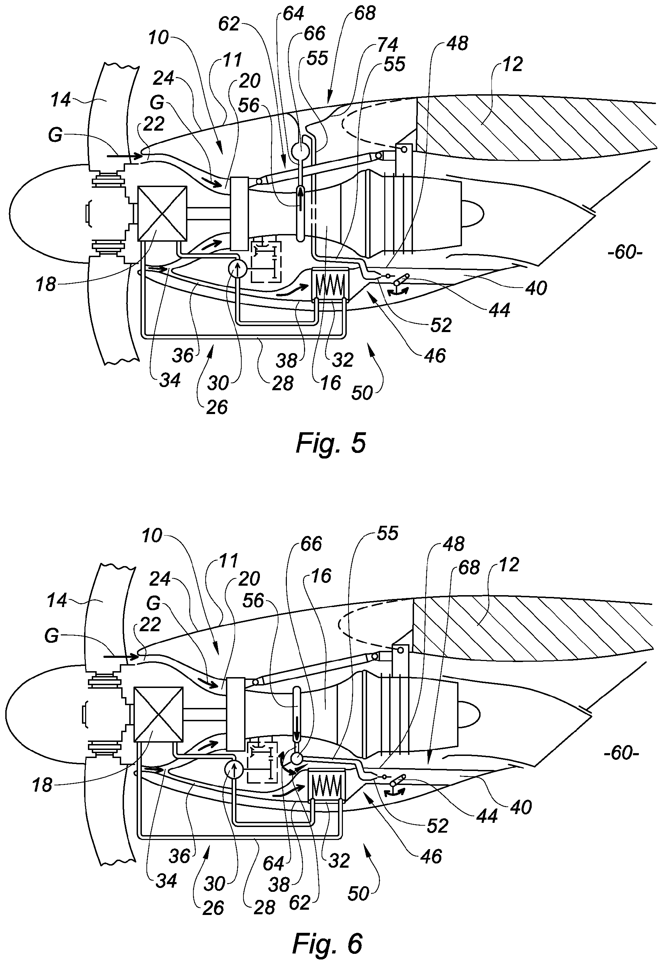

Par exemple, comme l'illustre la figure 5 qui représente une deuxième variante du premier mode de réalisation de l'invention, le circuit de décharge 68 peut comporter une sortie destinée à évacuer le flux d'air de décharge directement à l'extérieur du turbopropulseur 10, c'est-à-dire dans le milieu ambiant 60, par l'intermédiaire d'une écope 74 similaire à celle qui a été représentée précédemment à la figure 1 en référence à l'état de la technique. Le dispositif de refroidissement 50 comporte dans ce cas aussi une dérivation 55 reliée au circuit de décharge 68 pour permettre d'alimenter la buse 52, et cette dérivation est par exemple localisée dans l'écope 74.

Enfin, selon une troisième variante du premier mode de réalisation de l'invention qui a été représenté à la figure 6, le circuit de décharge du compresseur pourrait comporter une unique sortie constituée de la buse 52 de pulvérisation. Dans ce cas, le circuit de décharge 68 précédemment évoqué est purement et simplement remplacé par la buse de pulvérisation 52, et le conduit de dérivation 55 prolonge le piquage 64. Cette solution simplifie considérablement le circuit de décharge 68 mais nécessite néanmoins un calcul rigoureux du dimensionnement de la buse 52 et du débit au travers de la vanne de décharge 66, afin que le débit ne soit pas trop élevé et ne risque pas de provoquer un refroidissement trop important de l'échangeur 32.

Selon des deuxième à quatrième modes de réalisation de l'invention, la vanne de décharge est une vanne 67 régulée à au moins trois voies dont une entrée 69 est reliée au compresseur 56, dont une sortie 71 est reliée au circuit de décharge 68, et dont au moins une sortie 73 est reliée à au moins une buse 52 associée à un dispositif 50 de refroidissement correspondant, la vanne 67 assurant la régulation progressive du débit entre ses sorties.

Comme l'illustre la figure 7, selon un deuxième mode de réalisation de l'invention, la turbomachine 10 ne comporte qu'un dispositif de refroidissement 50 et la vanne 67 est une vanne à trois voies qui susceptible de réguler le débit d'air prélevé sur le compresseur 56 qui lui parvient par son entrée 69, pour le répartir entre sa sortie 71 liée au dispositif de décharge 68 et sa sortie 73 liée à la buse 52 de l'éjecteur 46 du dispositif de refroidissement 50. La vanne 67 peut par exemple consister en une vanne à tiroir permettant une régulation progressive du débit d'air entre ses sorties 71 et 73 en faisant varier une section de passage déterminée par la position d'un tiroir.

Une telle vanne 67 étant largement connue de l'état de la technique, elle ne sera pas plus décrite dans la suite de la présente description.

Cette configuration permet, de par la progressivité de la régulation du débit entre les sorties 71, 73 de la vanne 67 de réguler le débit d'air envoyé à la buse 52 en fonction des phases de vol, et d'adapter les performances de l'échangeur 32 à la température de l'huile qui est elle-même conditionnée par l'environnement du moteur, par exemple, un environnement correspondant à une évolution de l'aéronef au sol, en vol à basse altitude ou en vol à haute altitude.

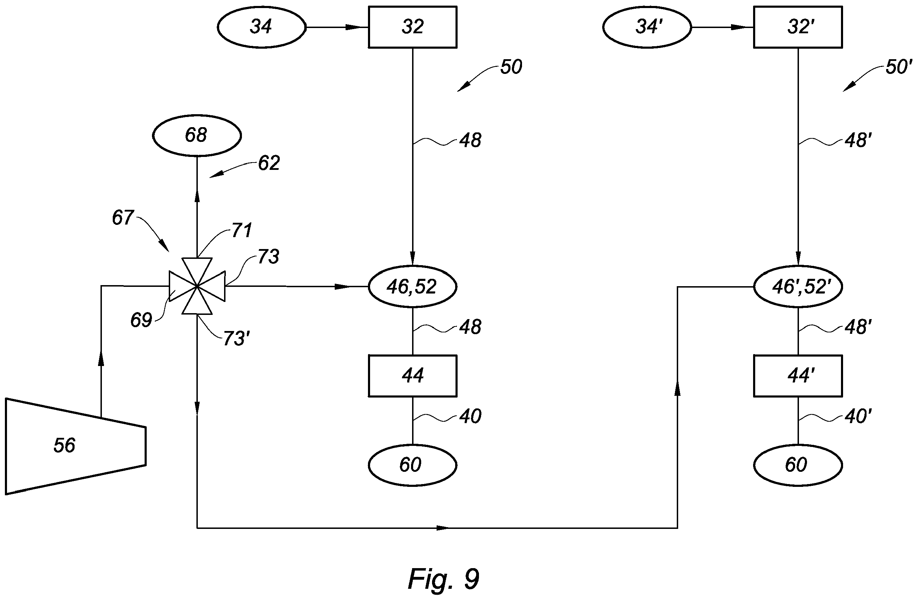

Comme l'illustre la figure 9, selon un troisième mode de réalisation de l'invention, la turbomachine 10 comporte deux dispositifs de refroidissement 50, 50' et la vanne de décharge 67 est une vanne régulée à quatre voies dont une entrée 69 est reliée au compresseur 56, dont une sortie 71 est reliée au circuit de décharge 68, et dont deux sorties 73, 73' sont reliées à des buses 52, 52' associée chacune à un des dispositifs 50, 50' de refroidissement indépendants. Chaque dispositif 50, 50' comporte un échangeur de chaleur 32 ,32' alimenté par une prise d'air 34, 34' et une sortie d'air qui est reliée à un éjecteur 46, 46' du type trompe à jet comportant un conduit 48, 48' de passage d'un flux d'air secondaire issu de cette sortie d'air, la buse 52, 52' de pulvérisation étant reçue à l'intérieur dudit conduit de passage 48.

Dans cette configuration, la vanne 67 est susceptible de réguler le débit d'air prélevé sur le compresseur 56 qui lui parvient par son entrée 69, pour le répartir entre sa sortie 71 liée au dispositif de décharge 68 et ses sorties 73, 73' reliées aux buses 52, 52' des éjecteurs 46, 46' des dispositifs de refroidissement 50, 50'. Similairement au mode de réalisation précédent, la vanne de décharge 67 peut par exemple consister en une vanne à tiroir permettant une régulation progressive du débit d'air entre ses sorties 71, 73 et 73'.

Cette configuration est particulièrement adaptée à une turbomachine 10 pour laquelle, en réponse aux contraintes d'installation et d'encombrement des dispositifs de refroidissement 50, 50', il est préférable d'utiliser plusieurs échangeurs 32, 32' de taille réduite plutôt qu'un seul échangeur de taille élevée. Chaque échangeur 32, 32', alimenté en air de manière indépendante peut aussi être relié à un circuit indépendant de fluide caloporteur qui refroidit l'organe 18 de manière indépendante.

Il sera compris que l'invention n'est pas limitée à des modes de réalisation incluant des vannes de décharge à trois et quatre voies, mais peut comprendre une vanne comportant un nombre supérieur de voies et par conséquent un nombre supérieur de sorties associées chacune à un dispositif de refroidissement.

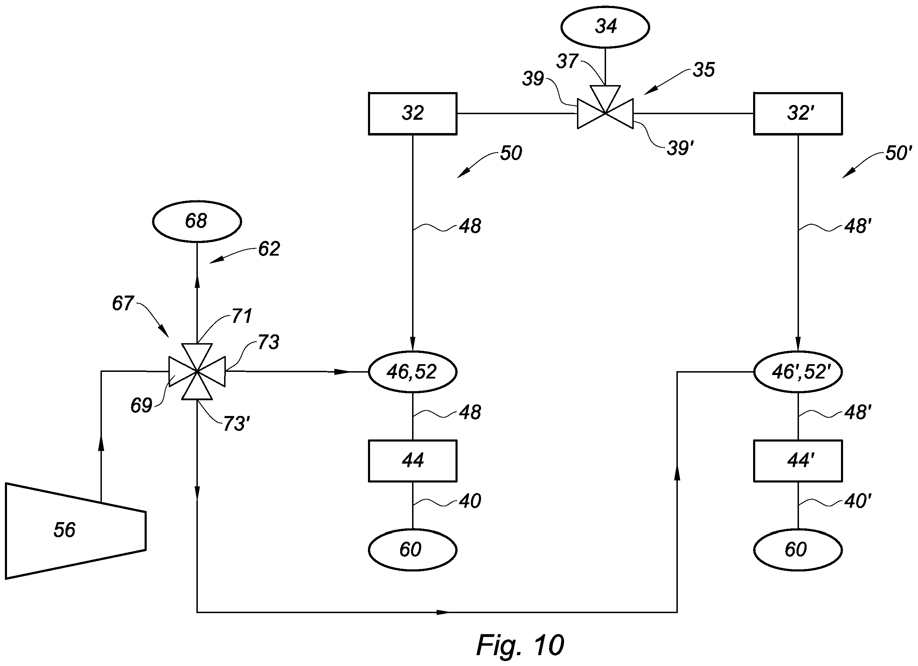

La figure 10 illustre un quatrième mode de réalisation de l'invention dans lequel la vanne de décharge 67 est également une vanne régulée à quatre voies dont une entrée 69 est reliée au compresseur 56, dont une sortie 71 est reliée au circuit de décharge 68, et dont deux sorties 73, 73' sont reliées à des buses 52, 52' associée chacune à un dispositif 50, 50' de refroidissement indépendant.

Toutefois, dans ce troisième mode de réalisation, les dispositifs 50, 50' comportent chacun des échangeurs de chaleur respectifs 32 ,32' qui sont alimentés par une prise d'air commune 34. Cette configuration est particulièrement adaptée à une turbomachine 10 qui est reçue dans une nacelle 11 pour laquelle la place disponible ne permet pas de disposer de plus d'une prise d'air 34. Avantageusement, dans ce mode de réalisation, les échangeurs 32, 32' sont reliés à deux sorties 39, 39' d'une vanne d'alimentation 35 conformée sous la forme d'une vanne régulée à trois voies dont l'entrée 37 est reliée une prise d'air commune 34, la vanne d'alimentation 35 assurant la régulation progressive du débit d'air entre ses au moins deux sorties 39.

Il sera compris que dans le cas d'une turbomachine comportant un nombre supérieur de dispositifs de refroidissement, il pourrait être prévu une prise d'air commune 34 reliée à une vanne multivoies comportant autant de sorties que la turbomachine comporte de dispositifs de refroidissement.

Il sera également compris que, dans les troisième et quatrième modes de réalisation de l'invention, le choix du nombre de dispositifs de refroidissement 50, 50' sera directement dicté par la place disponible dans la nacelle 11 et par le coût d'implantation de tels dispositifs.

D'une manière générale, dans le mode de réalisation préféré de l'invention, l'échangeur 32 est un échangeur air/huile de refroidissement de l'huile de lubrification d'un organe du la turbomachine 10.

Par exemple, dans le cas d'un turbopropulseur 10 du type de celui qui a été représenté aux figures 4 à 6, l'organe est un réducteur analogue au réducteur 18 de la figure 1.

Un refroidissement trop important de l'huile circulant dans l'échangeur 32 pourrait pénaliser le rendement de ce réducteur 18. Il importe donc de contrôler l'utilisation du ou des dispositifs de refroidissements.

Ainsi, l'invention propose un procédé de commande d'au moins un dispositif de refroidissement 50 d'au moins un organe 18 d'une turbomachine, comportant un échangeur 32 de chaleur dont une sortie d'air est reliée à un éjecteur 46 du type trompe à jet qui comporte un conduit 48 de passage d'un flux d'air secondaire issu de ladite sortie d'air ainsi qu'une buse 52 de pulvérisation d'un flux d'air primaire à l'intérieur dudit conduit de passage 48, qui comporte au moins une étape d'alimentation de la buse 52 de pulvérisation au cours de laquelle on alimente la buse 52 de pulvérisation par un flux d'air de décharge provenant du circuit de décharge 68 d'un compresseur de la turbomachine. Cette étape d'alimentation correspond à un fonctionnement à faible puissance de la turbomachine 10, notamment un fonctionnement à un régime de ralenti, au cours duquel la vanne de décharge 66, 67 dont une sortie est reliée au circuit de décharge 68, est ouverte. Selon les modes de réalisation de la turbomachine 10, et notamment dans le cas de l'utilisation d'une vanne de décharge 67) à plusieurs voies, on alimente la buse 52 de pulvérisation par un flux d'air de décharge régulé par la vanne 67.

Il sera compris que dès lors que l'utilisation de la trompe à jet n'est plus requise pour améliorer le refroidissement de l'échangeur 18, le procédé détermine une étape de coupure d'alimentation de la buse 52 de pulvérisation. Cette étape de coupure d'alimentation de la buse 52 de pulvérisation correspond à un fonctionnement à puissance nominale ou maximale, au cours duquel la vanne de décharge 66, 67 est fermée.

L'invention permet donc de partager une même alimentation en air comprimé au profit du circuit de décharge 68 et du dispositif 50 de refroidissement, et de partager également la commande de cette alimentation par l'utilisation d'une vanne 66 ou 67 de décharge commune, ce qui permet de réduire de manière utile la masse de la turbomachine 10.

L'invention permet également de partager une prise d'air 34 entre plusieurs dispositifs de refroidissement 50, 50'.

Les prises d'air 34 ou 34' utilisées dans la turbomachine selon l'invention sont de préférence des fentes de prise d'air analogues à celle qui a été représentée aux figures 4, 5, 6, et 8. Toutefois, l'utilisation de prises d'air du type d'une écope affleurante de type Flush ou NACA, ou encore l'utilisation d'une écope de type dynamique peut être envisagée sans changer la nature de l'invention, le choix du type de prise d'air étant déterminé par une corrélation du débit d'air qu'elle est susceptible de fournir et du dimensionnement des organes du ou des dispositifs de refroidissement correspondants.

L'invention permet donc de simplifier le circuit de refroidissement d'un organe de turbomachine de manière simple et efficace.

## Revendications

1. Turbomachine (10), comportant :
- un dispositif (62) de décharge d'un compresseur (56), en particulier haute pression, évacuant l'air sous pression selon des débits élevés, comportant au moins une vanne de décharge dudit compresseur (56) dont une sortie est reliée à un circuit de décharge (68) apte à évacuer un flux d'air de décharge, et
- au moins un dispositif (50) de refroidissement d'au moins un organe (18), comportant un échangeur de chaleur (32) dont une sortie d'air est reliée à un éjecteur (46) du type trompe à jet, qui comporte un conduit (48) de passage d'un flux d'air secondaire issu de ladite sortie d'air ainsi qu'une buse (52) de pulvérisation d'un flux d'air primaire à l'intérieur dudit conduit de passage (48),
**caractérisée en ce que** le dispositif (62) de décharge est agencé en aval du compresseur (56) qu'il décharge et **en ce que** la buse (52) est reliée audit circuit de décharge (68).

2. Turbomachine (10) selon la revendication 1, **caractérisée en ce que** le circuit de décharge (68) du compresseur (56) comporte au moins une sortie destinée à évacuer le flux d'air de décharge à l'intérieur d'une veine d'écoulement interne (G) des gaz de la turbomachine.

3. Turbomachine (10) selon la revendication 1, **caractérisée en ce que** le circuit de décharge (68) du compresseur (56) comporte au moins une sortie destinée à évacuer le flux d'air de décharge à l'extérieur d'une veine d'écoulement interne (G) des gaz de la turbomachine.

4. Turbomachine (10) selon la revendication 3, **caractérisée en ce que** le circuit de décharge (68) comporte au moins une sortie destinée à évacuer le flux d'air de décharge à l'extérieur de la turbomachine (10).

5. Turbomachine (10) selon la revendication 1, **caractérisée en ce que** le circuit de décharge (68) du compresseur (56) comporte une unique sortie constituée de la buse (52) de pulvérisation.

6. Turbomachine (10) selon l'une des revendications précédentes, **caractérisée en ce que** la vanne de décharge est une vanne (66) à deux voies dont une entrée est reliée au compresseur (56) et dont une sortie est reliée au circuit de décharge (68) et à la buse (52) du dispositif (50) de refroidissement, la pulvérisation du flux d'air primaire dans la buse (52) étant autorisée ou interrompue uniquement par la vanne de décharge (66).

7. Turbomachine (10) selon l'une des revendications 1 à 4, **caractérisée en ce que** la vanne de décharge est une vanne (67) régulée à au moins trois voies dont une entrée est reliée au compresseur (56), dont une sortie est reliée au circuit de décharge (68), et dont au moins une sortie est reliée à une buse (52) associée à un dispositif (50) de refroidissement, la vanne (67) assurant la régulation progressive du débit entre ses sorties.

8. Turbomachine (10) selon l'une des revendications précédentes, **caractérisée en ce que** l'échangeur (32) est un échangeur air/huile de refroidissement de l'huile de lubrification de l'organe (18) de la turbomachine.

9. Turbomachine (10) selon l'une des revendications précédentes, **caractérisée en ce qu'**une entrée d'air (34) de l'échangeur (32) de chaque dispositif de refroidissement (50) est reliée pour son alimentation en air extérieur à une prise d'air (34) débouchant en surface d'une nacelle (11) de support de la turbomachine (10).

10. Turbomachine (10) selon la revendication précédente, **caractérisé en ce qu'**elle comporte au moins deux dispositifs (50, 50') de refroidissement dont des entrées d'air (34, 34') des échangeurs (32, 32') sont reliées à autant de sorties (39) d'une vanne d'alimentation (35) régulée dont l'entrée (37) est reliée une prise d'air commune (34), ladite vanne d'alimentation (35) assurant la régulation progressive du débit d'air entre ses au moins deux sorties (39).

11. Procédé de commande d'au moins un dispositif (50) de refroidissement d'au moins un organe (18) d'une turbomachine (10) selon l'une des revendications 1 à 10, comportant un échangeur (32) de chaleur dont une sortie d'air est reliée à un éjecteur (46) du type trompe à jet qui comporte un conduit (48) de passage d'un flux d'air secondaire issu de ladite sortie d'air ainsi qu'une buse (52) de pulvérisation d'un flux d'air primaire à l'intérieur dudit conduit de passage (48),
**caractérisé en ce qu'**il comporte au moins une étape d'alimentation de la buse de pulvérisation (52) au cours de laquelle on alimente la buse (52) de pulvérisation par un flux d'air de décharge provenant d'un circuit de décharge (68) d'un compresseur (56) de la turbomachine (10), et au moins une étape de coupure d'alimentation de la buse de pulvérisation (52).

12. Procédé de commande selon la revendication précédente, **caractérisé en ce que** l'étape d'alimentation correspond à un fonctionnement à faible puissance de la turbomachine (10), notamment un fonctionnement à un régime de ralenti, au cours duquel une vanne (66) de décharge, dont une sortie est reliée au circuit de décharge (68), est ouverte, et **en ce que** l'étape de coupure d'alimentation de la buse (52) de pulvérisation correspond à un fonctionnement à puissance nominale ou maximale, au cours duquel la vanne de décharge (66) est fermée.

## Patentansprüche

1. Turbomaschine (10), die umfasst:
- eine Ablassvorrichtung (62) eines Kompressors (56), insbesondere eines Hochdruckkompressors, der Druckluft mit hohen Durchsatzmengen abgibt, mit mindestens einem Ablassventil des Kompressors (56), von dem ein Auslass mit einem Ablasskreislauf (68) verbunden ist, der in der Lage ist, einen Abluftstrom abzuleiten, und
- mindestens eine Vorrichtung (50) zur Kühlung mindestens eines Bauteils (18), mit einem Wärmetauscher (32), von dem ein Luftauslass mit einer Strahldüse (46) vom Typ Strahlrohr verbunden ist, die eine Leitung (48) für den Durchgang eines von dem Luftauslass kommenden Sekundärluftstroms sowie eine Düse (52) zur Zerstäubung eines Primärluftstroms im Inneren der Durchgangsleitung (48) aufweist,
**dadurch gekennzeichnet, dass** die Ablassvorrichtung (62) stromabwärts von dem durch sie abgelassenen Kompressor (56) angeordnet ist und dass die Düse (52) mit dem Ablasskreislauf (68) verbunden ist.

2. Turbomaschine (10) nach Anspruch 1, **dadurch gekennzeichnet, dass** der Ablasskreislauf (68) des Kompressors (56) mindestens einen Auslass zum Ableiten des Abluftstroms innerhalb eines internen Gasströmungskanals (G) der Turbomaschine aufweist.

3. Turbomaschine (10) nach Anspruch 1, **dadurch gekennzeichnet, dass** der Ablasskreislauf (68) des Kompressors (56) mindestens einen Auslass zum Ableiten des Abluftstroms außerhalb eines internen Gasströmungskanals (G) der Turbomaschine aufweist.

4. Turbomaschine (10) nach Anspruch 3, **dadurch gekennzeichnet, dass** der Ablasskreislauf (68) mindestens einen Auslass zum Ableiten des Abluftstroms aus der Turbomaschine (10) heraus aufweist.

5. Turbomaschine (10) nach Anspruch 1, **dadurch gekennzeichnet, dass** der Ablasskreislauf (68) des Kompressors (56) einen einzigen Auslass aufweist, der aus der Zerstäubungsdüse (52) besteht.

6. Turbomaschine (10) nach einem der vorhergehenden Ansprüche, **dadurch gekennzeichnet, dass** das Ablassventil ein Zweiwegeventil (66) ist, von dem ein Einlass mit dem Kompressor (56) und ein Auslass mit dem Ablasskreislauf (68) und mit der Düse (52) der Kühlvorrichtung (50) verbunden ist, wobei das Zerstäuben des Primärluftstroms in der Düse (52) nur durch das Ablassventil (66) zugelassen bzw. unterbrochen wird.

7. Turbomaschine (10) nach einem der Ansprüche 1 bis 4, **dadurch gekennzeichnet, dass** das Ablassventil ein mindestens dreiweggeregeltes Ventil (67) ist, von dem ein Einlass mit dem Kompressor (56), ein Auslass mit dem Ablasskreislauf (68) und mindestens ein Auslass mit einer Düse (52), die einer Kühlvorrichtung (50) zugeordnet ist, verbunden sind, wobei das Ventil (67) die progressive Regelung des Durchsatzes zwischen seinen Auslässen gewährleistet.

8. Turbomaschine (10) nach einem der vorhergehenden Ansprüche, **dadurch gekennzeichnet, dass** der tauscher (32) ein Luft/Öl-tauscher der Schmierölkühlung des Bauteils (18) der Turbomaschine ist.

9. Turbomaschine (10) nach einem der vorhergehenden Ansprüche, **dadurch gekennzeichnet, dass** ein Lufteinlass (34) des tauschers (32) jeder Kühlvorrichtung (50) für deren Außenluftversorgung mit einem Lufteinlass (34) verbunden ist, der zur Oberfläche einer Trägergondel (11) der Turbomaschine (10) führt.

10. Turbomaschine (10) nach dem vorhergehenden Anspruch, **dadurch gekennzeichnet, dass** die Turbomaschine mindestens zwei Kühlvorrichtungen (50, 50') umfasst, deren Lufteinlässe (34, 34') der tauscher (32, 32') mit ebenso vielen Auslässen (39) eines geregelten Versorgungsventils (35) verbunden sind, dessen Einlass (37) mit einem gemeinsamen Lufteinlass (34) verbunden ist, wobei das Versorgungsventil (35) die progressive Regelung des Luftdurchsatzes zwischen seinen mindestens zwei Auslässen (39) gewährleistet.

11. Verfahren zur Steuerung mindestens einer Vorrichtung (50) zur Kühlung mindestens eines Bauteils (18) einer Turbomaschine (10) nach einem der Ansprüche 1 bis 10, mit einem Wärmetauscher (32), von dem ein Luftauslass mit einer Strahldüse (46) vom Typ Strahlrohr verbunden ist, die eine Leitung (48) für den Durchgang eines von dem Luftauslass kommenden Sekundärluftstroms sowie eine Düse (52) zur Zerstäubung eines Primärluftstroms im Inneren der Durchgangsleitung (48) aufweist,
**dadurch gekennzeichnet, dass** das Verfahren mindestens einen Schritt der Versorgung der Zerstäubungsdüse (52) umfasst, bei dem die Zerstäubungsdüse (52) mit einem aus einem Ablasskreislauf (68) eines Kompressors (56) der Turbomaschine (10) kommenden Abluftstrom versorgt wird, und mindestens einen Schritt der Unterbrechung der Versorgung der Zerstäubungsdüse (52) umfasst.

12. Steuerungsverfahren nach dem vorhergehenden Anspruch, **dadurch gekennzeichnet, dass** der Schritt der Versorgung einem Betrieb der Turbomaschine (10) mit geringer Leistung entspricht, insbesondere einem Leerlaufbetrieb, bei dem ein Ablassventil (66), von dem ein Auslass mit dem Ablasskreislauf (68) verbunden ist, offen ist, und dass der Schritt des Unterbrechens der Versorgung der Zerstäubungsdüse (52) einem Betrieb mit Nenn- oder Höchstleistung entspricht, bei dem das Ablassventil (66) geschlossen ist.

## Claims

1. Turbine engine (10), comprising:
- a device (62) for bleeding a compressor (56), particularly a highpressure compressor discharging the pressurised air at high flow rates, comprising at least one valve for bleeding said compressor (56), an outlet of said valve being connected to a bleed system (68) designed to discharge a bleed airflow; and
- at least one device (50) for cooling at least one unit (18), comprising a heat exchanger (32), an air outlet of which is connected to an ejector (46) of the jet pump type, which comprises a feed-through duct (48) for a secondary airflow coming from said air outlet as well as a nozzle (52) for spraying a primary airflow inside said feed-through duct (48),
**characterised in that** the device (62) for bleeding the compressor (56) is located downstream the compressor (56) and **in that** the nozzle (52) is connected to said bleed system (68).

2. Turbine engine (10) according to claim 1, **characterised in that** the bleed system (68) of the compressor (56) comprises at least one outlet intended to discharge the bleed airflow inside an internal flow stream (G) of the turbine engine gases.

3. Turbine engine (10) according to claim 1, **characterised in that** the bleed system (68) of the compressor (56) comprises at least one outlet intended to discharge the bleed airflow outside an internal flow stream (G) of the turbine engine gases.

4. Turbine engine (10) according to claim 3, **characterised in that** the bleed system (68) comprises at least one outlet intended to discharge the bleed airflow outside the turbine engine (10).

5. Turbine engine (10) according to any of the preceding claims, **characterised in that** the bleed system (68) of the compressor (56) comprises a single outlet formed by the spray nozzle (52).

6. Turbine engine (10) according to any of the preceding claims, **characterised in that** the bleed valve is a two-way valve (66), an inlet of which is connected to the compressor (56) and an outlet of which is connected to the bleed system (68) and to the nozzle (52) of the cooling device (50), the spraying of the primary airflow into the nozzle (52) being permitted or interrupted solely by the bleed valve (66).

7. Turbine engine (10) according to any of claims 1 to 4, **characterised in that** the bleed valve is a control valve (67) with at least three ports, one inlet of which is connected to the compressor (56), one outlet of which is connected to the bleed system (68) and at least one outlet of which is connected to a nozzle (52) associated with a cooling device (50), the valve (67) progressively regulating the flow between its outlets.

8. Turbine engine (10) according to any of the preceding claims, **characterised in that** the exchanger (32) is an air/cooling oil exchanger for the lubrication oil of the unit (18) of the turbine engine.

9. Turbine engine (10) according to any of the preceding claims, **characterised in that** an air inlet (34) of the exchanger (32) of each cooling device (50) is connected to an air intake (34) for its outside air supply, which intake opens onto the surface of a support nacelle (11) of the turbine engine (10).

10. Turbine engine (10) according to the preceding claim, **characterised in that** it comprises at least two cooling devices (50, 50'), for which the air inlets (34, 34') of the exchangers (32, 32') are connected to as many outlets (39) of a feed control valve (35), the inlet (37) of which is connected to a common air intake (34), said feed valve (35) progressively regulating the airflow between its at least two outlets (39).

11. Method for controlling at least one device (50) for cooling at least one unit (18) of a turbine engine (10) according to one of claims 1 to 10, comprising a heat exchanger (32), an air outlet of which is connected to an ejector (46) of the jet pump type, which comprises a feed-through duct (48) for a secondary airflow coming from said air outlet, as well as a nozzle (52) for spraying a primary airflow inside said feed-through duct (48),
**characterised in that** it comprises at least one step of feeding the spray nozzle (52), during which the spray nozzle (52) is fed with a bleed airflow originating from a bleed system (68) of a compressor (56) of the turbine engine (10), and at least one step of cutting off the feed to the spray nozzle (52).

12. Control method according to the preceding claim, **characterised in that** the feed step corresponds to low-powered operation of the turbine engine (10), particularly idling speed operation, during which a bleed valve (66), an outlet of which is connected to the bleed system (68), is open, and **in that** the step of cutting off the feed to the spray nozzle (52) corresponds to nominal or maximum-powered operation, during which the bleed valve (66) is closed.
